# EUROPEAN PATENT SPECIFICATION

(11) **EP 4 369 135 B1**
(45) Date of publication and mention of the grant of the patent: **28.05.2025**
(21) Application number: 22315284.4
(22) Date of filing: 10.11.2022
(51) Int. Cl.: G05D 1/242, G05D 1/667, G05D 105/28, G05D 107/70, G05D 109/10, G05D 111/10

(54) **METHOD AND SYSTEM FOR SWAP BODY DETECTION**
VERFAHREN UND SYSTEM ZUR ERKENNUNG VON WECHSELAUFBAUTEN
PROCÉDÉ ET SYSTÈME DE DÉTECTION DE UNE CAISSE MOBILE

(43) Date of publication of application: 15.05.2024
(73) Proprietor: Easymile, 31000 Toulouse (FR); KAMAG Transporttechnik GmbH & Co. KG, 89079 Ulm (DE)
(72) Inventor: Brosseau, Fabien, 31400 Toulouse (FR); Leconte, Marie, 31380 Vlillaries (FR)
(74) Representative: BCF Global

(56) References cited:
- DE-A1- 102005 008 874
- US-A1- 2018 134 531
- MASUTA HIROYUKI ET AL: "Plane extraction using Point Cloud data for service robot", 2016 IEEE SYMPOSIUM SERIES ON COMPUTATIONAL INTELLIGENCE (SSCI), IEEE, 6 December 2016 (2016-12-06), pages 1 - 6, XP033066635, DOI: 10.1109/SSCI.2016.7850239
- RAGURAMAN SRIRAM JAYACHANDRAN ET AL: "Intelligent Drivable Area Detection System using Camera and Lidar Sensor for Autonomous Vehicle", 2020 IEEE INTERNATIONAL CONFERENCE ON ELECTRO INFORMATION TECHNOLOGY (EIT), IEEE, 31 July 2020 (2020-07-31), pages 429 - 436, XP033832312, DOI: 10.1109/EIT48999.2020.9208327

## Description

### FIELD

The present technology relates to swap body detection, and more particularly to a method and system for processing information received from sensors mounted on a vehicle so as to provide, in relation to notably position, and/or orientation, and/or type of a swap body, assistance to navigation of the vehicle toward docking under the swap body.

### BACKGROUND

Today's vehicles, including autonomous, driverless, unmanned or uncrewed, etc. ones, commonly use sensors mounted on the vehicle to detect possible obstacles and allow avoidance behavior, such as a complete stop or a trajectory change, or driver alerts, so as to navigate safely through environments.
« Sensor » as used herein, designates an opto-electronic apparatus, such as for example a LIDAR sensor, based on the principle of emitting a lightwave beam, catching the reflections of objects (backscattering) in the field of view, and providing relative position information about reflecting objects, with a given scanning frequency in one or multiple scanning layers (or "rows" in the case of a Flash LIDAR). Such a sensor may for example be a sensor available on the market at the time of filing this patent application, such as reference VLP-16 from Velodyne, and any subsequent equivalent technologies becoming available, regardless of their name.

In industrial environments where swap bodies are stored, assistance to autonomy or to a driver may be needed for the navigation of a vehicle used to approach the swap body, before docking under it, picking it up and transporting it elsewhere. Such assistance may take the form, through processing of data from the sensors mounted on the vehicle, of detection of the target swap body after identification of certain of its characteristics, that allows safe approach by the vehicle.

This detection may be particularly challenging where, without limitation:
- the sensors' view of the target body swap is incomplete or occulted: the swap body may for example be stored alongside other swap bodies, and the vehicle's approach trajectory within that environment may not allow the swap body to be plainly in sight throughout;
- even if a few of swap bodies' dimensions may be standardized, the swap bodies differ through, without limitation, rigid or flexible body surfaces, surfaces with variable flatness, color of body and/or legs, and deterioration and wear, particularly of the legs, etc; and
- the environment in which the vehicle operates is affected by weather (ex: rain) or dust, as may very well be the case in industrial environments.

In addition, this detection has to be sufficiently fast so as to truly assist with the navigation. "Real time" processing of data provided by the sensors mounted on the vehicle is critical to the safety of the vehicle's docking operation under the swap body. For example, sensors may provide new data at a 10Hz frequency: for example depending on data processing hardware capabilities, the detection software may have to be optimized, for example by making a number of assumptions before calculation so as to simplify it, or by disregarding certain data provided by the sensors so as to limit the processing.

US Application 2018/0134531 published 17 May 2018 discloses a forklift including a fork mounted on a vehicle body, and a laser sensor configured to generate track data for moving the vehicle body to a loading position of the load or the pallet based on distance data as measured by the laser sensor.

Publication entitled "Intelligent Drivable Area Detection System using Camera and Lidar Sensor for Autonomous Vehicle" published 31 July 2020 (IEEE conference on electro information technology) and authored by Sriram Jayachandran Raguraman, discloses a sensor fusion method by utilizing LiDAR and Camera sensor together to develop a robust drivable road detection system for autonomous vehicles.

Publication entitled "Plane Extraction using Point Cloud Data for Service Robot", published 6 December 2016 (IEEE Symposium series on computational intelligence) and authored by Hiroyuki Masuta et al., discloses a plane extraction method using point cloud data to perceive an unknown object for a service robot.

German patent application DE 10 2005 008874 published 7 September 2006 discloses a method for the optical display and operation of image-supported navigation in vehicles and a device for using the method for image-supported navigation in vehicles, with which it is possible for the driver to find target objects and then approach quickly and precisely

### SUMMARY

Embodiments of the present technology have been developed based on developers' appreciation of shortcomings associated with the prior art, in particular various aspects of the present technology provide a method and system for detection of a target swap body having a front plane, a side plane and four legs, to be picked up by a vehicle equipped with a fusion and labelling system and at least one sensor, wherein the pointcloud received from the fusion and labelling system is analysed toward detecting the front plane, and/or the side plane and/or at least three of the four legs, and a model is updated accordingly and provided to a navigation system of the vehicle.

Various aspects of the present technology provide for a method and system for detection of a target swap body as in the appended claims.

In the context of the present description, unless expressly provided otherwise, a "processor" may refer, but is not limited to, any type of "computing system", "electronic device", "computer-based system", "controller unit", "monitoring device", "server" and/or any combination thereof appropriate to the relevant task at hand, in relation to receiving, storing, processing, and/or forwarding data.

In the context of the present specification, the expression "FPGA" is intended to include Field Programmable Gate Array computing systems, available on the market at the time of filing this patent application, such as references Xilinx VU9P, or Intel Stratix V, and any subsequent equivalent technologies becoming available, regardless of their name, consisting in computing system hardware programmable with software.

In the context of the present description, a "processor" may include a single dedicated processor, a single shared processor, or a plurality of individual processors, some of which may be shared. A "processor" may be a general purpose processor, such as a central processing unit (CPU), a processor dedicated to a specific purpose, or a processor implemented in a FPGA. Other hardware and software, conventional and/or custom, may also be included in a "processor".

In the context of the present description, unless expressly provided otherwise, the expression "memory" is intended to include Random Access storage systems, available on the market at the time of filing this patent application, and any subsequent equivalent technologies becoming available, regardless of their name, consisting in computing system media for storing digital information. An example of such memory may be a Quad Data Rate (QDR) Static Random Access Memory (SRAM).

### BRIEF DESCRIPTION OF THE DRAWINGS

For a better understanding of the present technology, as well as other aspects and further features thereof, reference is made to the following description which is to be used in conjunction with the accompanying drawings, where:
Figure 1 depicts a simplified top view of a vehicle in which the present technology may be implemented;
Figure 2 illustrates a swap body that may be detected using the present technology;
Figure 3 illustrates an industrial environment wherein assistance to the approach of a vehicle toward a swap body to be picked up may be provided by the present technology;
Figure 4 presents an overview of the method steps in the present technology; and
Figure 5 illustrates a computing system that may be used in the present technology.

### DETAILED DESCRIPTION

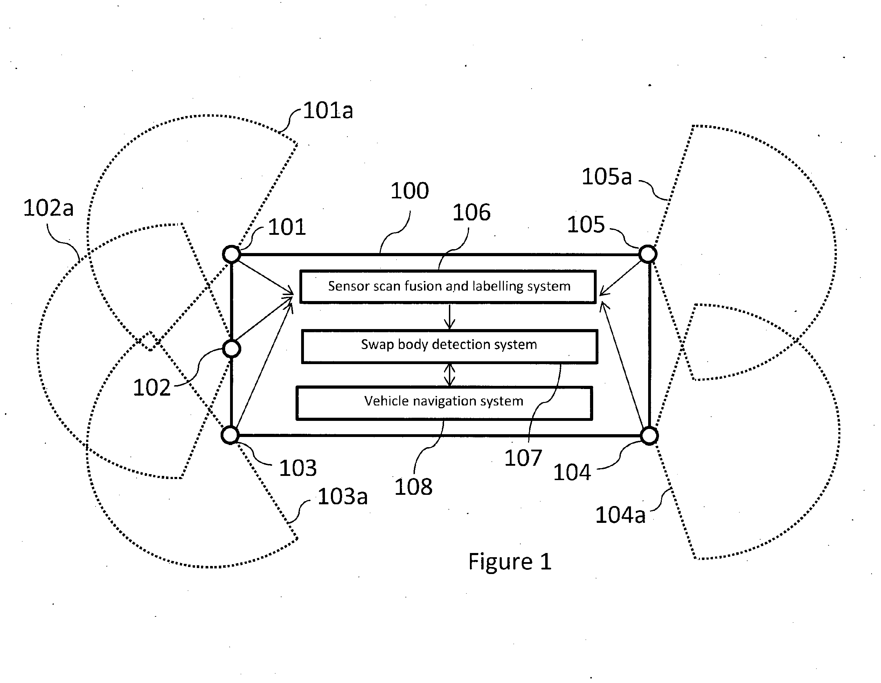

Figure 1 depicts a simplified top view of a vehicle in which the present technology may be implemented. Such a Vehicle 100, may be equipped with, for example, five Sensors 101-105. The respective fields of view 101a-105a of such sensors may cover operating range areas at the front (101a-103a) and at the rear (104a-105a) of the Vehicle 100. As a reminder, fields of view are not represented to scale on Figure 1. Not only the number, but also the mounting location (including height relative to the ground) on the Vehicle 100, of Sensors 101-105 are also depicted as mere examples, and are not limiting with the present technology.

Raw data provided by Sensors 101-105 may, as is known by the person skilled in the art, be fed to a Sensor scan fusion and labelling system 106, which may process them and form a pointcloud therefrom, for example through fusion. The labelling processing itself by such a system may vary from quasi-absent to more sophisticated, and consist for example in a capability to associate with each point, in addition to XYZ coordinates, a probability information that a given point corresponds to the ground. All such optional labelling capabilities are compatible with the present technology.

The Vehicle 100 may also be equipped with a Vehicle navigation system 108, which in the case of a driverless vehicle, may action traction and steering of the vehicle, or otherwise may control or alert systems to assist with the driving activity.

The present technology may, in such an example, as Swap body detection system 107, sit between the Sensor scan fusion and labelling system 106 and the Vehicle navigation system 108 to process the pointcloud output by the Sensor scan fusion and labelling system 106, toward detecting a swap body and forming a model thereof that may be fed to the Vehicle navigation system 108. In such an example, the Swap body detection system 107 may also interact with the Vehicle navigation system 108 and receive feedback from it.

A "model" as used herein, is information related to a swap body that both is calculated by Swap body detection system 107 based on the pointcloud received from the Sensor scan fusion and labelling system 106, and may be used for assistance by the Vehicle navigation system 108 when provided to it by the Swap body detection system 107.

For example, a model comprises:
- the location of a swap body, for example a XY location of its center; and
- its orientation, for example through a vector extending from the aforementioned XY location.

In aspects of the present technology, the model may further comprise without limitation other information features related to planes, such as their orientation, or a probability that the model matches a particular swap body type, etc.

Finally, even though not represented on Figure 1, it will be apparent to the person skilled in the art that Vehicle 100 may be communicably connected, whether it be an autonomous vehicle or not, to a distant server, or other computing system, providing information to including Swap body detection system 107 and/or Vehicle navigation system 108. This communication may take place through wire (for example when Vehicle 100 is parked) or wirelessly (for example when Vehicle 100 is in motion). This information may for example be related to navigation of Vehicle 100 toward a swap body, or expected location or orientation of a particular swap body, or input parameters for the calculations involved in each of the Swap body detection system 107 and Vehicle navigation system 108, that may be received at Vehicle 100 directly by both systems, or either one of them, and transmitted to the other through interaction between the two.

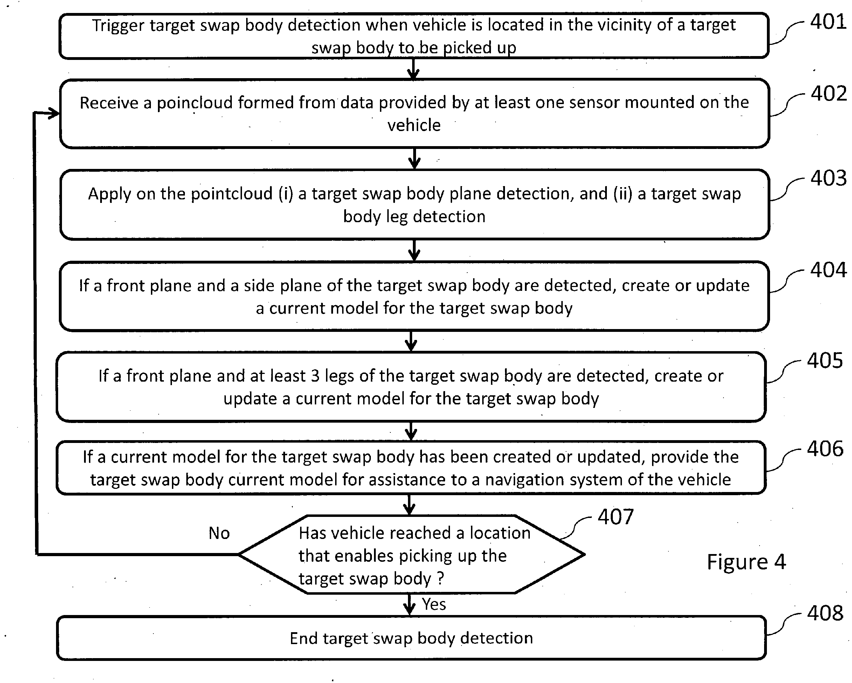

It will be also appreciated by the person skilled in the art that, although conceptually represented physically separated on Figure 1, blocks such as Sensor scan fusion and labelling system 106, Vehicle navigation system 108, and Swap body detection system 107 merely represent functions which may be realized in a single physical entity or in separate physical entities. Conversely, even though represented physically included in the Vehicle 100, certain of these blocks could represent functions that are performed remotely. Each block may comprise hardware and/or software and/or firmware (or a combination thereof), as is known, to execute functions according to the invention, including the processes described in relation to Figure 4.

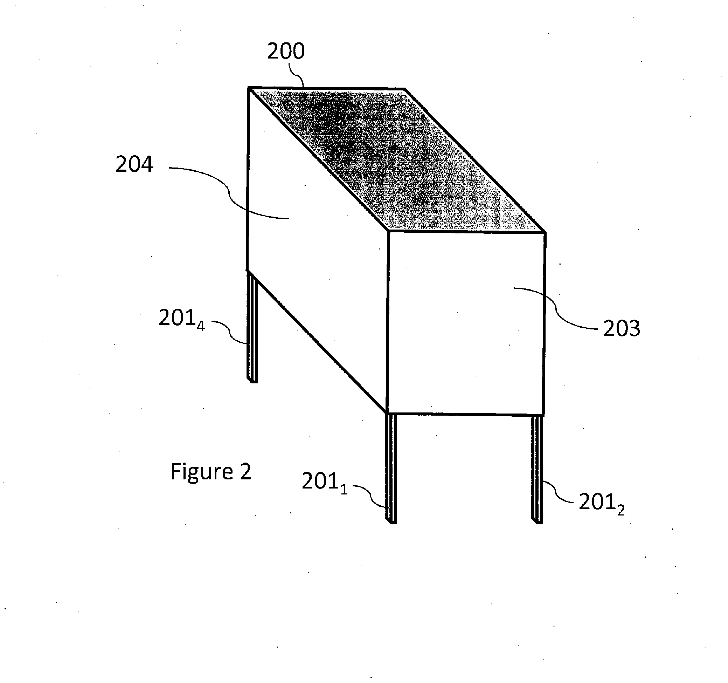

Figure 2 illustrates a swap body that may be detected using the present technology. The assumptions made by the present technology during the detection process, is that a Swap body 200 is expected to:
- be a rectangular parallelepiped; and
- have legs 201₁-201₄ extending down from the lower plane (leg 201₃ not shown on Figure 2).

As used herein:
- a front plane 203 is a vertical side of the parallelepiped under which the Vehicle 100 engages the Swap body 200 (and so in the illustrated case, the Vehicle 100 travels through legs 201₁-201₂; and
- a side plane 204 is a vertical side of the parallelepiped that is perpendicular to the front plane 203.

Apart from possibly the width of the front plane 203 (ex: 2.55m), swap bodies' dimensions are very little standardized.

In addition, legs through wear and tear may be damaged, and/or be not strictly perpendicular to the lower plane of the parallelepiped (for example legs are often retractable under the swap body, and may not have been put back up in a complete vertical position).

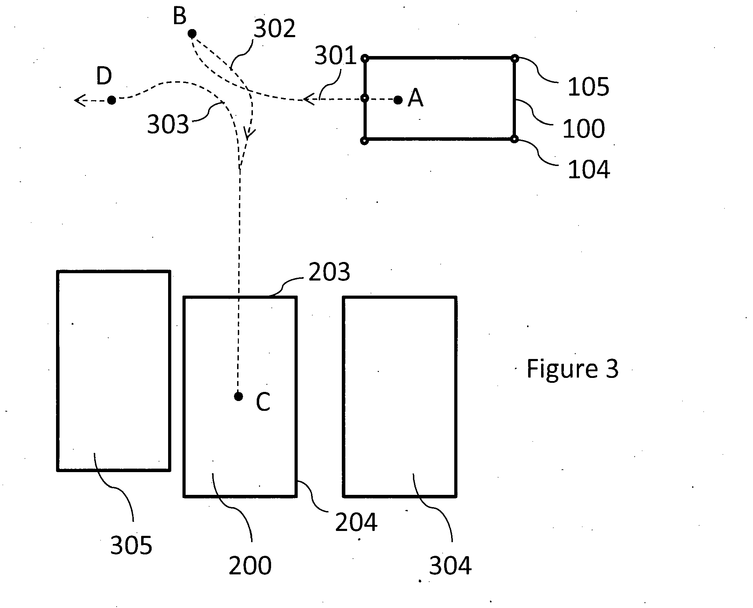

Figure 3 illustrates an industrial environment wherein assistance to the approach of a vehicle toward a swap body to be picked up (as target swap body) may be provided by the present technology. The Swap body 200, to be picked up by the Vehicle 100, may be stored among other stored swap bodies, for example swap bodies 304 and 305 illustrated on Figure 3. It will be appreciated that other swap bodies may not be perfectly aligned in the industrial environment of storage, with the target swap body.

The Vehicle 100 may be uploaded with target swap body expected location and orientation information regarding the location and/or the orientation of the Swap body 200, which may be both hypothetical (the target Swap body 200 may actually not be at that location) and approximate (the information of expected location or orientation has a given margin of error). This information may for example consist in a map of the industrial environment. It may also for example be XY coordinates of the centre point of a horizontal plane of the Swap body 200, combined with a vector extending from such point and indicating an orientation for Swap body 200. Such target swap body expected location and orientation will help bring Vehicle 100 (whether autonomously or with the assist of a driver) up to point A on Figure 3, ie in the vicinity of target Swap body 200.

Then starting with trajectory 301 (from point A to point B), the detection according to the present technology is triggered, along with the interaction between Swap body detection system 107 and the Vehicle navigation system 108 (from Figure 1). It may be triggered automatically, or manually by an operator even in the case of an autonomous Vehicle 100.

During trajectory 301:
- sensors mounted on the Vehicle 100 (front and rear) collect detection information about the Swap body 200, in particular its front face 203, its side face 204, and its legs, and output an associated pointcloud that may be processed by the present technology to provide assistance along the trajectory; and
- the Vehicle 100 prepares its final approach to Swap body 200 (as an example in this case: reach a position allowing it to back up along a direction substantially parallel to the longitudinal axis of the Swap body 200, and going substantially through its center).

During trajectory 302 (from point B to point C):
- sensors mounted on the Vehicle 100 (mostly if not exclusively the rear sensors 104-105 on Figure 1) continue to collect as much as possible of the same detection information about the Swap body 200, and to output an associated pointcloud that continues to be processed by the present technology to provide further assistance along the trajectory; and
- the Vehicle 100 backs up toward docking under the front face 203 of Swap body 200.

It will be apparent to the person skilled in the art that:
- precision is required so that Vehicle 100 does not damage the legs of Swap body 200 when it docks under its front face 203;
- the closest Vehicle 100 gets to Swap body 200 and in particular the point C, the more Sensors 101-105 will collect detection information about the legs 201₁₋₄ of the Swap body 200;
- the interaction between Swap body detection system 107 and the Vehicle navigation system 108 affords the possibility for Vehicle 100 to move back and forth between point B and point C, in order to be as aligned as possible and the docking under Swap body 200 be as centered as possible; and
- once the best possibly centered position has been reached at point C, the detection according to the present technology may be stopped, along with the interaction between Swap body detection system 107 and the Vehicle navigation system 108 (from Figure 1).

Once the Swap body 200 is docked and picked up, the Vehicle 100 may follow a trajectory 303 (from point C to point D) to transport the Swap body 200 to a different location.

It will be apparent to the person skilled in the art that what has been described above for picking up Swap body 200 is equally applicable to unloading it (with detection instead that there is no swap body already in the storage spot where the Swap body 200 is intended to be unloaded).

Figure 4 presents an overview of the method steps in the present technology. At step 401, the overall detection method is triggered for a target swap body. It may be triggered in different ways, all within the scope of the present technology. For example, the method may be triggered manually, for example by a driver, when the vehicle is located in the vicinity of the target swap body to dock under and pick up. For example, the method may be triggered automatically when the vehicle reaches a location in the vicinity of the target swap body to dock under and pick up. For example, the Vehicle 100 of Figure 1, in the particular case of an autonomous one, may be uploaded with the expected location and orientation information of the Swap body 200, from which a vicinity location may be calculated (as an example the point A on figure 3): when Vehicle 100 reaches such vicinity location, the method may be triggered automatically.

At step 402, a pointcloud is received that is formed from data provided by at least one sensor mounted on the vehicle. The person skilled in the art knows how to form such a pointcloud, for example through known fusion systems. For example, a fusion of data from all five Sensors 101-105 of Vehicle 100 of Figure 1 may be performed by Sensor scan fusion and labelling system 106, and provided to the Swap body detection system 107.

In aspects of the present technology, the forming of the pointcloud may be augmented with a labelling of the points, as is known in the art. For example, Sensor scan fusion and labelling system 106 may associate with each point, in addition to XYZ coordinates, a probability information that a given point corresponds to the ground, and provide such coordinates and probability information to the Swap body detection system 107. Other such labelling options may be had, that become optional input parameters provided to the Swap body detection system 107, see for example under "Input parameters" below.

At step 403, two detection systems are applied on the received pointcloud: a first system aims at identifying in the pointcloud/detecting a front and a side plane of the target swap body, and a second system aims at identifying in the pointcloud/detecting the front plane and at least three legs of the target swap body. For example, Swap body detection system 107 of Vehicle 100 of Figure 1, may apply such detection systems on the pointcloud received from Sensor scan fusion and labelling system 106.

At step 404, an assessment of the result for the first detection system is made: if a front and a side plane of the target swap body are identified in the pointcloud/detected, then a model for the target body is updated (or created if none exists). If a front plane only is identified in the pointcloud/detected, this information is kept for use in the next step. For example, Swap body detection system 107 of Vehicle 100 of Figure 1, may make such assessment relative to the pointcloud received from Sensor scan fusion and labelling system 106, and create/update a model for the target swap body.

At step 405, an assessment of the result for the second detection system is made: if a front plane and at least three legs of the target swap body are identified in the pointcloud/detected, then the model for the target body is updated (or created if none exists). For example, Swap body detection system 107 of Vehicle 100 of Figure 1, may make such assessment relative to the pointcloud received from Sensor scan fusion and labelling system 106, and create/update the model for the target swap body.

It will be apparent to the person skilled in the art that a different order in the respective detection assessments of front plane, side plane and legs may be had still within the scope of the method according to the present technology.

At step 406, if the model for the target swap body has been created/updated at step 404 or 405, then the current version of the model for the target swap body, if any is available, is provided to the vehicle for assistance to navigation. For example, Swap body detection system 107 of Vehicle 100 of Figure 1, may provide such information to the Vehicle navigation system 108.

In aspects of the present technology, while the current model is provided to a navigation system of the vehicle only when created/updated:
- the navigation system may make use of the information that a pointcloud formation cycle has elapsed without receiving a created/updated model for the target swap body; and/or
- the navigation system may have access to a log history of models received thus far.

In other aspects of the present technology, the current model may be provided to the navigation system of the vehicle at each pointcloud formation cycle, regardless of whether it has been created or updated during the cycle.

At step 407, a test is made whether the vehicle has reached a location that enables picking up the target swap body. If it has, the overall target swap body detection is ended at step 408. If not, overall target swap body detection is resumed at step 402, for the next, or a next, cycle of available and received pointcloud that is formed from data provided by the at least one sensor mounted on the vehicle.

The detection of the vehicle reaching the enabling location leading to the overall detection method being stopped, may be achieved in different ways, all within the scope of the present technology. For example, the method may be stopped manually, for example by a driver, when the vehicle has docked under the target swap body. For example, the method may be stopped automatically when it is automatically detected that the vehicle has docked under the target swap body. For example, the Vehicle 100 of Figure 1, in the particular case of an autonomous one, may recognize, for example through GPS calculation capabilities, that it has docked under the target swap body (as an example it has reached point C on figure 3): when Vehicle 100 reaches a particular location where assistance to navigation is no longer necessary or helpful to the picking up of the target swap body, the method may be stopped automatically.

We will now go into details of calculation, for example by the Swap body detection system 107, that may be involved with aspects of the present technology, as well as of input parameters, and potential optimization for the calculation.

### Identifying a front and a side plane

The person skilled in the art knows of algorithms aimed at processing a pointcloud toward identifying in the pointcloud/detecting planes, for example a front and a side plane. In the particular case of a swap body, such planes are perpendicular. This characteristic may be exploited, and in aspects of the present technology, the identifying in the pointcloud/detecting a front and a side plane of the target swap body may comprise applying an algorithm that allows more accurate grouping of points belonging to the same family (here: to the same front or side plane), ie: Randomized Hough Transform. Such a technique is for example described in the article: "Fast and Robust Normal Estimation for Point Clouds with Sharp Features", Alexandre Boulch, , Renaud Marlet, Eurographics Symposium on Geometry Processing, 2012, Vol.31 (5), p.1765-1774. Such a technique allows to better reconstruct normals at a corner, such as at the intersection between the front plane and the side plane. Each point is thus provided with an estimate for its normal.

Points with substantially the same normal may then be grouped in at least two clusters using for example a kd-tree algorithm.

To obtain a line equation once the points are grouped, a RANSAC algorithm may be used.

A front and a side plane may be detected if the vectors corresponding to the at least two line equations are substantially perpendicular.

An inlier rate may be calculated to check the line equation calculation.

### Identifying three legs

The person skilled in the art knows of algorithms aimed at processing a pointcloud toward identifying in the pointcloud/detecting three legs. It also knows how of ways to combine the information of a previously identified in the pointcloud/detected front plane with the operation of identifying in the pointcloud/detecting three feet.

In aspects of the present technology, the identifying in the pointcloud/detecting at least three legs of the target swap body may further comprise:
- projecting points of the pointcloud onto a XY reference frame, such as the ground; this first step allows to account for a large number of points belonging to a leg, including points that are quite spaced apart in the Z axis, as may be the case depending on the distance of the sensors from the legs when the vehicle approaches the target swap body (up to the length of the legs, which in an industrial environment, may be of an order of magnitude of the meter);
- clustering projected points; the clustering algorithm may be the same (kd-tree) as that mentioned above in relation to the detection of planes; and
- assessing positions of projected points to determine whether each cluster belongs to the target swap body, and retaining clusters that belong to the target swap body as detected legs.

Optional input parameters (as defined below) in relation to expected dimensions of legs may be used to filter out potentially unknown objects lying near the target swap body that represent a risk to the vehicle, or avoid detection of legs that are too damaged (for example not quite straight).

Optionally also, the information may be used that at least three legs have been detected even though no front face has been detected, to partially update the model as regard orientation of the target swap body, possibly also to infer that the target swap body matches an expected type for the swap body (if that information is part of input parameters, see below).

### Input parameters

In aspects of the present technology, the foregoing algorithms and calculation are fed with certain input parameters that are provided to Vehicle 100 as described above, or provided to Swap body detection system 107 by another system of Vehicle 100, for example Sensor scan fusion and labelling system 106 or Vehicle navigation system 108.

Apart from a poincloud to be processed, necessary input parameters comprise for example:
- RANSAC parameters, for example max iterations (for example 50), or fit distance, etc.;
- plane estimator parameters of the Randomized Hough Transform algorithm;
- leg estimator parameters, such as mean size (for example 0, 1m), or radius, etc., for the kd-tree algorithm; or
- a relative or absolute parallel threshold, beyond which two vectors are considered to be parallel, for example a vector for the target swap body orientation in the model, and a calculated vector for the front plane.

Other input parameters may be optional, such as:
- a minimum number of points for a cluster to be potentially identified as a leg (for example 7);
- a minimum number of points for a received pointcloud to be processed (for example 800);
- certain labelling of points of the received pointcloud, for example with an indication of belonging or not to the ground. This may for example be performed by Sensor scan fusion and labelling system 106 of Vehicle 100, and allow Swap body detection system 107 to limit the number of points in the processed pointcloud by disregarding certain points with a probability higher than a given threshold to belong to the ground;
- a point area research tolerance may be provided to limit the area within which the identifying in the pointcloud/detecting of the front and side planes, and of the three legs, takes place. This may for example allow Swap body detection system 107 to limit the number of points in the processed pointcloud by disregarding certain points with a probability higher than a given threshold to be too remote from the location in the target swap body expected location and orientation information;
- a Z threshold may be provided under which points of the received pointcloud are not taken into account, for example 0,3m. This may for example allow Swap body detection system 107 to be less susceptible to noise introduced by points generated by objects bouncing off the ground, for example rain drops;
- a Z threshold may be provided to divide the received pointcloud in two sub-pointclouds. This may for example allow Swap body detection system 107 to limit the processing toward detection of the body of the target swap body to points of a first sub-pointcloud (above a given height), and/or limit the processing toward detection of the legs of the target swap body to points of the second sub-pointcloud (below a given height);
- a X (or Y) threshold may be provided to divide the received pointcloud in two sub-pointclouds. This may for example allow Swap body detection system 107 to limit the processing toward detection of a left leg of the target swap body to points of a first sub-pointcloud (left of a given point), and/or to limit the processing toward detection of a right leg of the target swap body to points of the second sub-pointcloud;
- information related to a particular type for the target swap body, among a variety of types of swap bodies that may be found in a given industrial environment. From this information may for example be inferred a minimum and/or a maximum size of the side plane that is attempted to be identified in the pointcloud/detected. if available, this input parameter may for example allow to augment the model with additional information features related to a probability that the detected side plane belongs to a swap body that matches a particular type.

### Calculation optimization

In aspects of the present technology, the foregoing algorithms and calculation may be optimized. This may be necessary when for example the computing in a particular hardware and/or software environment can hardly match the frequency at which pointclouds are received, and generally the requirements of "real time" processing.

For example, the number of actually processed points from the received pointcloud may be limited, as may be afforded by the input parameters pursuant to the section above.

Further, developers of the present technology have, as an option, taken advantage of the situation when:
- at least three legs are identified in the pointcloud/detected, but no front face has been: this may allow to update the model for the target swap body as regard orientation (only). This may for example be implemented by adding a method step between steps 405 and 406 on Figure 4; or
- a front plane has been identified in the pointcloud/detected: this may allow to refine the analysis related to legs, by inferring that a particular identified in the pointcloud/detected leg is a front leg, or a leg at the back of the target swap body.

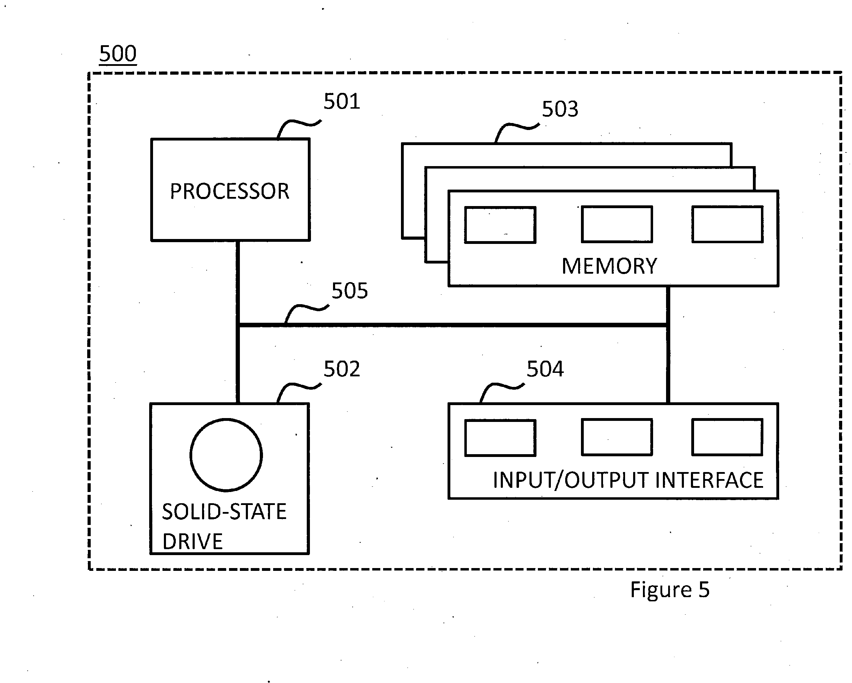

Figure 5 illustrates a computing system that may be used in the present technology, for example in any one or all of the functional elements Swap body detection system 107, Sensor scan fusion and labelling system 106 and/or Vehicle navigation system 108 of Figure 1. As will be appreciated by the person skilled in the art, such computing system may be implemented in any other suitable hardware, software, and/or firmware, or a combination thereof, and may be a single physical entity, or several separate physical entities with a distributed functionality.

In some aspects of the present technology, the Computing system 500 may comprise various hardware components including one or more single or multi-core processors collectively represented by a Processor 501, a Memory 503 and an Input/output interface 504. In this context, the Processor 501 may or may not be included in a FPGA. In some other aspect, the Computing system 500 may be an "off the shelf" generic computing system. In some aspect, the Computing system 500 may also be distributed amongst multiple systems. The Computing system 500 may also be specifically dedicated to the implementation of the present technology. As a person in the art of the present technology may appreciate, multiple variations as to how the Computing system 500 is implemented may be envisioned without departing from the scope of the present technology.

Communication between the various components of the Computing system 500 may be enabled by one or more internal and/or external Buses 505 (e.g. a PCI bus, universal serial bus, IEEE 1394 "Firewire" bus, SCSI bus, Serial-ATA bus, ARINC bus, etc.), to which the various hardware components are electronically coupled.

The Input/output interface 504 may enable networking capabilities such as wire or wireless access. As an example, the Input/output interface 504 may comprise a networking interface such as, but not limited to, a network port, a network socket, a network interface controller and the like. Multiple examples of how the networking interface may be implemented will become apparent to the person skilled in the art of the present technology.

The Memory 503 may store Code instructions 1108, such as those part of, for example, a library, an application, etc. suitable for being loaded into the Memory 503 and executed by the Processor 501 for implementing the method and process steps according to the present technology. The Memory 503 may also store a Database 1109. The person skilled in the art will appreciate that any of the Database 1109, the Code instructions 1108, and generally the Memory 503, may also physically reside outside of the Computing System 500, still within the scope of the present technology.

The Input/output interface 504 may allow Computing System 500 to be communicably connected to other processors through a Connection 1110.

## Claims

1. A method for detection of a target swap body (200) having a front plane (203), a side plane (204) and four legs (201₁-201₄), to be picked up by a vehicle (100) equipped with a fusion and labelling system (106) and at least one sensor (101-105), wherein the method is triggered (401) when the vehicle reaches a first location within a range of the target swap body, the method comprising:
- receiving (402) from the fusion and labelling system (106) a pointcloud formed from data provided by the at least one sensor;
the method being **characterized in that** it further comprises:
- processing (403) the received pointcloud by:
- if (404) the front and the side plane of the target swap body are detected, creating a model, or updating a current model for the target swap body;
- if (405) the front plane and at least three of the four legs of the target swap body are detected, creating a model, or updating the current model for the target swap body;
- if at least three of the four legs of the target swap body are detected and no front plane is detected, updating the current model for the target swap body as regard the calculated orientation for the target swap body; and
- if (406) a model for the target swap body has been created or updated, providing the current model for the target swap body to a navigation system (108) of the vehicle (100), wherein the current model comprises a calculated location and orientation for the target swap body; and
- repeating (407) the receiving and processing to assist the vehicle (100) navigate from the first location to a second location enabling picking up the target swap body (200).

2. The method of claim 1, wherein processing the received pointcloud further comprises:
- if the front plane and at least one leg of the target swap body is detected, adding to the current model a probability that the at least one leg belongs to the front of the target swap body.

3. The method of any of the claims 1 to 2, wherein processing the received pointcloud further comprises:
- applying a Randomized Hough Transform to obtain normals of points in the received pointcloud;
- applying a kd-tree algorithm for grouping points with substantially the same normal in at least two first clusters;
- applying a RANSAC algorithm to obtain a line equation for each of the at least two first clusters; and
- detecting a front and side plane if the vectors corresponding to the at least two line equations are substantially perpendicular.

4. The method of any of the claims 1 to 3, wherein processing the received pointcloud further comprises:
- projecting points of the pointcloud onto a XY reference frame;
- applying a kd-tree algorithm for grouping projected points in at least one second cluster; and
- assessing positions of projected points in the at least one second cluster, and detecting a leg if the at least one second cluster belongs to the target swap body.

5. The method of any of the claims 1 to 4, further comprising receiving input parameters, wherein the input parameters comprise a type for the target swap body, and wherein the current model further comprises a probability that the detected side plane belongs to a swap body that matches the type for the target swap body.

6. The method of any of the claims 1 to 4, further comprising receiving input parameters, wherein the input parameters comprise a Z threshold, and wherein points from the received pointcloud below the Z threshold are disregarded.

7. The method of any of the claims 1 to 4, further comprising receiving input parameters, wherein the input parameters comprise a Z threshold, and wherein the received pointcloud is divided into two sub-pointclouds, a first and a second, of points from the received pointcloud respectively above and below the Z threshold, and wherein the creating or updating a model for the target swap body is only if:
- the front and the side plane of the target swap body are detected in the first sub-pointcloud; or
- the front plane is detected in the first sub-pointcloud, and at least three of the four legs of the target swap body are detected in the second sub-pointcloud.

8. A system for detection of a target swap body (200) having a front plane (203), a side plane (204) and four legs (201₁-201₄), to be picked up by a vehicle (100) equipped with a fusion and labelling system (106) and at least one sensor (101-105), the system being configured to:
- receive (401) an indication that the vehicle reaches a first location within a range of the target swap body;
- receive (402) from the fusion and labelling system (106) a pointcloud formed from data provided by the at least one sensor;
the system being **characterized in that** it is further configured to:
- process (403) the received pointcloud by:
- if (404) the front and the side plane of the target swap body are detected, creating a model, or updating a current model for the target swap body; and
- if (405) the front plane and at least three of the four legs of the target swap body are detected, creating a model, or updating the current model for the target swap body;
- if at least three of the four legs of the target swap body are detected and no front plane is detected, updating the current model for the target swap body as regard the calculated orientation for the target swap body; and
- if (406) a model for the target swap body has been created or updated, providing the current model for the target swap body to a navigation system (108) of the vehicle (100), wherein the current model comprises a calculated location and orientation for the target swap body; and
- repeat (407) the receive and process to assist the vehicle (100) navigate from the first location to a second location enabling picking up the target swap body (200).

9. The system of claim 8, further configured to process the received pointcloud by:
- if the front plane and at least one leg of the target swap body is detected, adding to the current model a probability that the at least one leg belongs to the front of the target swap body.

10. The system of any of the claims 8 to 9, further configured to receive input parameters, wherein the input parameters comprise a type for the target swap body, and wherein the current model further comprises a probability that the detected side plane belongs to a swap body that matches the type for the target swap body.

11. The system of any of the claims 8 to 9, further configured to receive input parameters, wherein the input parameters comprise a Z threshold, and wherein points from the received pointcloud below the Z threshold are disregarded.

12. The system of any of the claims 8 to 9, further configured to receive input parameters, wherein the input parameters comprise a Z threshold, and wherein the received pointcloud is divided into two sub-pointclouds, a first and a second, of points from the received pointcloud respectively above and below the Z threshold, and wherein the creating or updating a model for the target swap body is only if:
- the front and the side plane of the target swap body are detected in the first sub-pointcloud; or
- the front plane is detected in the first sub-pointcloud, and at least three of the four legs of the target swap body are detected in the second sub-pointcloud.

13. A computer-readable medium comprising computer-readable instructions that, upon being executed by a system, cause the system to perform the method of any of the claims 1 to 7.

## Patentansprüche

1. Verfahren zur Detektion eines Zielwechselbehälters (200) mit einer vorderen Ebene (203), einer Seitenebene (204) und vier Beinen (201₁-201₄), der von einem Fahrzeug (100) aufgenommen werden soll, das mit einem Fusions- und Kennzeichnungssystem (106) und wenigstens einem Sensor (101-105) ausgestattet ist, wobei das Verfahren (401) ausgelöst wird, wenn das Fahrzeug eine erste Position innerhalb einer Reichweite des Zielwechselbehälters erreicht, wobei das Verfahren Folgendes umfasst:
Empfangen (402) einer Punktwolke vom Fusions- und Kennzeichnungssystem (106), die aus Daten gebildet wird, die von dem wenigstens einen Sensor bereitgestellt werden;
wobei das Verfahren **dadurch gekennzeichnet ist, dass** es ferner Folgendes umfasst:
Verarbeiten (403) der empfangenen Punktwolke durch:
wenn (404) die vordere und die Seitenebene des Zielwechselbehälters detektiert werden, Erstellen eines Modells oder Aktualisieren eines aktuellen Modells für den Zielwechselbehälter;
wenn (405) die vordere Ebene und wenigstens drei der vier Beine des Zielwechselbehälters detektiert werden, Erstellen eines Modells oder Aktualisieren des aktuellen Modells für den Zielwechselbehälter;
wenn wenigstens drei der vier Beine des Zielwechselbehälters detektiert werden und keine vordere Ebene detektiert wird, Aktualisieren des aktuellen Modells für den Zielwechselbehälter in Bezug auf die berechnete Ausrichtung für den Zielwechselbehälter; und
wenn (406) ein Modell für den Zielwechselbehälter erstellt oder aktualisiert wurde, Bereitstellen des aktuellen Modells für den Zielwechselbehälter an ein Navigationssystem (108) des Fahrzeugs (100), wobei das aktuelle Modell eine berechnete Position und eine berechnete Ausrichtung für den Zielwechselbehälter umfasst; und
Wiederholen (407) des Empfangens und Verarbeitens, um das Fahrzeug (100) beim Navigieren von der ersten Position zu einer zweiten Position zu unterstützen, der das Aufnehmen des Zielwechselbehälters (200) ermöglicht.

2. Verfahren nach Anspruch 1, wobei das Verarbeiten der empfangenen Punktwolke ferner Folgendes umfasst:
wenn die vordere Ebene und wenigstens ein Bein des Zielwechselbehälters detektiert werden, Hinzufügen einer Wahrscheinlichkeit zum aktuellen Modell, dass das wenigstens eine Bein zur Vorderseite des Zielwechselbehälters gehört.

3. Verfahren nach einem der Patentansprüche 1 bis 2, wobei das Verarbeiten der empfangenen Punktwolke ferner Folgendes umfasst:
Anwenden einer randomisierten Hough-Transformation, um Normalen von Punkten in der empfangenen Punktwolke zu erlangen;
Anwenden eines Kd-Baum-Algorithmus zum Gruppieren von Punkten mit im Wesentlichen derselben Normalen in wenigstens zwei ersten Clustern;
Anwenden eines RANSAC-Algorithmus, um eine Liniengleichung für jeden der wenigstens zwei ersten Cluster zu erlangen; und
Detektieren einer vorderen und einer Seitenebene, wenn die Vektoren, die den mindestens zwei Liniengleichungen entsprechen, im Wesentlichen senkrecht zueinander sind.

4. Verfahren nach einem der Patentansprüche 1 bis 3, wobei das Verarbeiten der empfangenen Punktwolke ferner Folgendes umfasst:
Projizieren von Punkten der Punktwolke auf einen XY-Referenzrahmen;
Anwenden eines Kd-Baum-Algorithmus zum Gruppieren projizierter Punkte in mindestens einem zweiten Cluster; und
Bewerten von Positionen projizierter Punkte in dem mindestens einen zweiten Cluster und Detektieren eines Beins, wenn der mindestens eine zweite Cluster zum Zielwechselbehälter gehört.

5. Verfahren nach einem der Patentansprüche 1 bis 4, ferner umfassend das Empfangen von Eingabeparametern, wobei die Eingabeparameter einen Typ für den Zielwechselbehälter umfassen, und wobei das aktuelle Modell ferner eine Wahrscheinlichkeit umfasst, dass die detektierte Seitenfläche zu einem Wechselbehälter gehört, der dem Typ für den Zielwechselbehälter entspricht.

6. Verfahren nach einem der Patentansprüche 1 bis 4, ferner umfassend das Empfangen von Eingabeparametern, wobei die Eingabeparameter einen Z-Schwellenwert umfassen, und wobei Punkte aus der empfangenen Punktwolke unterhalb des Z-Schwellenwerts nicht berücksichtigt werden.

7. Verfahren nach einem der Patentansprüche 1 bis 4, ferner umfassend das Empfangen von Eingabeparametern, wobei die Eingabeparameter einen Z-Schwellenwert umfassen, und wobei die empfangene Punktwolke in zwei Teilpunktwolken unterteilt wird, eine erste und eine zweite, von Punkten aus der empfangenen Punktwolke jeweils oberhalb und unterhalb des Z-Schwellenwerts, und wobei das Erstellen oder Aktualisieren eines Modells für den Zielwechselbehälter nur erfolgt, wenn:
die vordere und die Seitenebene des Zielwechselbehälters in der ersten Teilpunktwolke detektiert werden; oder
die vordere Ebene in der ersten Teilpunktwolke detektiert wird und wenigstens drei der vier Beine des Zielwechselbehälters in der zweiten Teilpunktwolke detektiert werden.

8. System zur Detektion eines Zielwechselbehälters (200) mit einer vorderen Ebene (203), einer Seitenebene (204) und vier Beinen (201₁-201₄), der von einem Fahrzeug (100) aufgenommen werden soll, das mit einem Fusions- und Kennzeichnungssystem (106) und wenigstens einem Sensor (101-105) ausgestattet ist, wobei das System so konfiguriert ist, dass es:
eine Anzeige empfängt (401), dass das Fahrzeug eine erste Position innerhalb einer Reichweite des Zielwechselbehälters erreicht;
(402) eine Punktwolke vom Fusions- und Kennzeichnungssystem (106) empfängt, die aus Daten gebildet wird, die von dem wenigstens einen Sensor bereitgestellt werden;
wobei das System **dadurch gekennzeichnet ist, dass** es ferner so konfiguriert ist, dass es:
(403) die empfangene Punktwolke verarbeitet durch:
wenn (404) die vordere und die Seitenebene des Zielwechselbehälters detektiert werden, Erstellen eines Modells oder Aktualisieren eines aktuellen Modells für den Zielwechselbehälter; und
wenn (405) die vordere Ebene und wenigstens drei der vier Beine des Zielwechselbehälters detektiert werden, Erstellen eines Modells oder Aktualisieren des aktuellen Modells für den Zielwechselbehälter;
wenn wenigstens drei der vier Beine des Zielwechselbehälters detektiert werden und keine vordere Ebene detektiert wird, Aktualisieren des aktuellen Modells für den Zielwechselbehälter in Bezug auf die berechnete Ausrichtung für den Zielwechselbehälter; und
wenn (406) ein Modell für den Zielwechselbehälter erstellt oder aktualisiert wurde, Bereitstellen des aktuellen Modells für den Zielwechselbehälter an ein Navigationssystem (108) des Fahrzeugs (100), wobei das aktuelle Modell eine berechnete Position und eine berechnete Ausrichtung für den Zielwechselbehälter umfasst; und
(407) das Empfangen und Verarbeiten wiederholt, um das Fahrzeug (100) beim Navigieren von der ersten Position zu einer zweiten Position zu unterstützen, was das Aufnehmen des Zielwechselbehälters (200) ermöglicht.

9. System nach Anspruch 8, das ferner so konfiguriert ist, dass es die empfangene Punktwolke verarbeitet durch:
wenn die vordere Ebene und wenigstens ein Bein des Zielwechselbehälters detektiert werden, Hinzufügen einer Wahrscheinlichkeit zum aktuellen Modell, dass das wenigstens eine Bein zur Vorderseite des Zielwechselbehälters gehört.

10. System nach einem der Patentansprüche 8 bis 9, das ferner so konfiguriert ist, dass es Eingabeparameter empfängt, wobei die Eingabeparameter einen Typ für den Zielwechselbehälter umfassen, und wobei das aktuelle Modell ferner eine Wahrscheinlichkeit umfasst, dass die detektierte Seitenebene zu einem Wechselbehälter gehört, der dem Typ für den Zielwechselbehälter entspricht.

11. System nach einem der Patentansprüche 8 bis 9, das ferner so konfiguriert ist, dass es Eingabeparameter empfängt, wobei die Eingabeparameter einen Z-Schwellenwert umfassen, und wobei Punkte aus der empfangenen Punktwolke unterhalb des Z-Schwellenwerts nicht berücksichtigt werden.

12. System nach einem der Patentansprüche 8 bis 9, das ferner so konfiguriert ist, dass es Eingabeparameter empfängt, wobei die Eingabeparameter einen Z-Schwellenwert umfassen, und wobei die empfangene Punktwolke in zwei Teilpunktwolken unterteilt wird, eine erste und eine zweite, von Punkten aus der empfangenen Punktwolke jeweils oberhalb und unterhalb des Z-Schwellenwerts, und wobei das Erstellen oder Aktualisieren eines Modells für den Zielwechselbehälter nur erfolgt, wenn:
die vordere und die Seitenebene des Zielwechselbehälters in der ersten Teilpunktwolke detektiert werden; oder
die vordere Ebene in der ersten Teilpunktwolke detektiert wird und wenigstens drei der vier Beine des Zielwechselbehälters in der zweiten Teilpunktwolke detektiert werden.

13. Ein computerlesbares Medium, umfassend computerlesbare Anweisungen, die bei Ausführung durch ein System das System veranlassen, das Verfahren nach einem der Patentansprüche 1 bis 7 durchzuführen.

## Revendications

1. Procédé de détection d'une caisse mobile cible (200) présentant un plan frontal (203), un plan latéral (204) et quatre pieds (201₁-201₄), destinée à être récupérée par un véhicule (100) équipé d'un système de fusion et d'étiquetage (106) et d'au moins un capteur (101-105), dans lequel le procédé est déclenché (401) lorsque le véhicule atteint un premier emplacement à portée de la caisse mobile cible, le procédé comprenant :
- la réception (402) du système de fusion et d'étiquetage (106) d'un nuage de points formé à partir de données fournies par l'au moins un capteur ;
le procédé étant **caractérisé en ce qu'**il comprend également :
- le traitement (403) du nuage de points reçu par :
- si (404) le plan avant et le plan latéral de la caisse mobile cible sont détectés, la création d'un modèle ou la mise à jour d'un modèle actuel pour la caisse mobile cible ;
- si (405) le plan frontal et au moins trois des quatre pieds de la caisse mobile cible sont détectés, la création d'un modèle ou mise à jour du modèle actuel de la caisse mobile cible ;
- si au moins trois des quatre pieds de la caisse mobile cible sont détectés et qu'aucun plan avant n'est détecté, la mise à jour du modèle actuel de la caisse mobile cible en ce qui concerne l'orientation calculée de la caisse mobile cible ; et
- si (406) un modèle pour la caisse mobile cible a été créé ou mis à jour, la fourniture du modèle actuel pour la caisse mobile cible à un système de navigation (108) du véhicule (100), dans lequel le modèle actuel comprend un emplacement et une orientation calculés pour la caisse mobile cible ; et
- la répétition (407) de la réception et le traitement pour aider le véhicule (100) à naviguer du premier emplacement à un second emplacement permettant de récupérer la caisse mobile cible (200).

2. Procédé selon la revendication 1, dans lequel le traitement du nuage de points reçu comprend également :
- si le plan avant et au moins un pied de la caisse mobile cible sont détectés, l'ajout au modèle actuel d'une probabilité que l'au moins un pied appartient à l'avant de la caisse mobile cible.

3. Procédé selon l'une quelconque des revendications 1 à 2, dans lequel le traitement du nuage de points reçu comprend également :
- l'application d'une transformée de Hough aléatoire pour obtenir les normales des points dans le nuage de points reçu ;
- l'application d'un algorithme kd-tree pour regrouper des points présentant sensiblement la même normale dans au moins deux premiers clusters ;
- l'application d'un algorithme RANSAC pour obtenir une équation de ligne pour chacun des au moins deux premiers clusters ; et
- la détection d'un plan frontal et latéral si les vecteurs correspondant aux au moins deux équations de ligne sont sensiblement perpendiculaires.

4. Procédé selon l'une quelconque des revendications 1 à 3, dans lequel le traitement du nuage de points reçu comprend également :
- la projection des points du nuage de points sur un référentiel XY ;
- l'application d'un algorithme kd-tree pour regrouper les points projetés dans au moins un second cluster ; et
- l'évaluation des positions des points projetés dans au moins un second groupe, et la détection d'une étape si au moins un second groupe appartient à la caisse mobile cible.

5. Procédé selon l'une quelconque des revendications 1 à 4, comprenant également la réception de paramètres d'entrée, dans lequel les paramètres d'entrée comprennent un type pour la caisse mobile cible, et dans lequel le modèle actuel comprend également une probabilité que le plan latéral détecté appartienne à un corps d'échange qui correspond au type pour la caisse mobile cible.

6. Procédé selon l'une quelconque des revendications 1 à 4, comprenant également la réception de paramètres d'entrée, dans lequel les paramètres d'entrée comprennent un seuil Z, et dans lequel les points du nuage de points reçu en dessous du seuil Z sont ignorés.

7. Procédé selon l'une quelconque des revendications 1 à 4, comprenant également la réception de paramètres d'entrée, dans lequel les paramètres d'entrée comprennent un seuil Z, et dans lequel le nuage de points reçu est divisé en deux sous-nuages de points, un premier et un second, de points du nuage de points reçu respectivement au-dessus et en dessous du seuil Z, et dans lequel la création ou la mise à jour d'un modèle pour la caisse mobile cible n'est effectuée que si :
- le plan avant et le plan latéral de la caisse mobile cible sont détectés dans le premier sous-nuage de points ; ou
- le plan frontal est détecté dans le premier sous-nuage de points, et au moins trois des quatre pieds de la caisse mobile cible sont détectées dans le second sous-nuage de points.

8. Système de détection d'une caisse mobile cible (200) présentant un plan frontal (203), un plan latéral (204) et quatre pieds (201₁-201₄), destinée à être récupérée par un véhicule (100) équipé d'un système de fusion et d'étiquetage (106) et d'au moins un capteur (101-105), le système étant configuré pour :
- recevoir (401) une indication selon laquelle le véhicule atteint un premier emplacement dans une plage de la caisse mobile cible ;
- recevoir (402) du système de fusion et d'étiquetage (106) d'un nuage de points formé à partir de données fournies par l'au moins un capteur ;
le système étant **caractérisé en ce qu'**il est également configuré pour :
- traiter (403) le nuage de points reçu par :
- si (404) le plan avant et le plan latéral de la caisse mobile cible sont détectés, la création d'un modèle ou la mise à jour d'un modèle actuel pour la caisse mobile cible ; et
- si (405) le plan frontal et au moins trois des quatre pieds de la caisse mobile cible sont détectés, la création d'un modèle ou mise à jour du modèle actuel de la caisse mobile cible ;
- si au moins trois des quatre pieds de la caisse mobile cible sont détectés et qu'aucun plan avant n'est détecté, la mise à jour du modèle actuel de la caisse mobile cible en ce qui concerne l'orientation calculée de la caisse mobile cible ; et
- si (406) un modèle pour la caisse mobile cible a été créé ou mis à jour, la fourniture du modèle actuel pour la caisse mobile cible à un système de navigation (108) du véhicule (100), dans lequel le modèle actuel comprend un emplacement et une orientation calculés pour la caisse mobile cible ; et
- répéter (407) la réception et le traitement pour aider le véhicule (100) à naviguer du premier emplacement à un second emplacement permettant de récupérer la caisse mobile cible (200).

9. Le système selon la revendication 8, configuré en outre pour traiter le nuage de points reçu par :
- si le plan avant et au moins un pied de la caisse mobile cible sont détectés, l'ajout au modèle actuel d'une probabilité que l'au moins un pied appartient à l'avant de la caisse mobile cible.

10. Système selon l'une quelconque des revendications 8 à 9, configuré également pour recevoir des paramètres d'entrée, dans lequel les paramètres d'entrée comprennent un type pour la caisse mobile cible, et dans lequel le modèle actuel comprend également une probabilité que le plan latéral détecté appartienne à une caisse mobile qui correspond au type pour la caisse mobile cible.

11. Système selon l'une quelconque des revendications 8 à 9, configuré également pour recevoir des paramètres d'entrée, dans lequel les paramètres d'entrée comprennent un seuil Z, et dans lequel les points du nuage de points reçu en dessous du seuil Z sont ignorés.

12. Système selon l'une quelconque des revendications 8 à 9, configuré également pour recevoir des paramètres d'entrée, dans lequel les paramètres d'entrée comprennent un seuil Z, et dans lequel le nuage de points reçu est divisé en deux sous-nuages de points, un premier et un second, de points du nuage de points reçu respectivement au-dessus et en dessous du seuil Z, et dans lequel la création ou la mise à jour d'un modèle pour la caisse mobile cible n'est effectuée que si :
- le plan avant et le plan latéral de la caisse mobile cible sont détectés dans le premier sous-nuage de points ; ou
- le plan frontal est détecté dans le premier sous-nuage de points, et au moins trois des quatre pieds de la caisse mobile cible sont détectées dans le second sous-nuage de points.

13. Support lisible par ordinateur comprenant des instructions lisibles par ordinateur qui, une fois exécutées par un système, amènent le système à réaliser le procédé selon l'une quelconque des revendications 1 à 7.
